# EUROPÄISCHE PATENTSCHRIFT

(11) **EP 1 688 280 B1**
(45) Veröffentlichungstag und Bekanntmachung des Hinweises auf die Patenterteilung: **14.11.2007**
(21) Anmeldenummer: 06000548.5
(22) Anmeldetag: 12.01.2006
(51) Int. Cl.: B60G 11/16, B60G 17/015, B60G 17/02, F16F 1/12

(54) **Vorrichtung zur Federung und Niveaueinstellung bei Kraftfahrzeugen**
Device to adjust the suspension and level of automotive vehicles
Dispositif de réglage de suspension et de nivelage des véhicules automobile

(30) Priorität: 08.02.2005 DE 102005005855
(43) Veröffentlichungstag der Anmeldung: 09.08.2006
(73) Patentinhaber: LuK Lamellen und Kupplungsbau Beteiligungs KG, 77815 Bühl (DE)
(72) Erfinder: Christophel, Aurelie, 67630 Durrenbach (FR); Raber, Christoph, 66564 Ottweiler-Steinbach (DE); Agner, Ivo, 77815 Bühl (DE); Speck, Andre, 76316 Malsch (DE)

(56) Entgegenhaltungen:
- DE-U1- 20 105 329
- US-A- 5 060 959
- US-A- 5 553 836
- US-A1- 2004 036 206
- PATENT ABSTRACTS OF JAPAN Bd. 2000, Nr. 21, 3. August 2001 (2001-08-03) & JP 2001 088527 A (NISSAN MOTOR CO LTD), 3. April 2001 (2001-04-03)

## Beschreibung

Die Erfindung betrifft eine Vorrichtung zur Federung und Niveaueinstellung bei Kraftfahrzeugen, mit einem ersten Anschlusselement zum Verbinden mit mindestens einem Fahrzeugrad und mit einem zweiten Anschlusselement zum Verbinden mit der Karosserie des Kraftfahrzeugs, mit wenigstens einer Fahrwerksfeder und einer Verstelleinrichtung, die zwei mittels eines Antriebsmotors antreibbaren Getriebes in ihrem Abstand zueinander verstellbare Widerlagerstellen aufweist, von denen eine erste Widerlagerstelle mit dem einen Anschlusselement verbunden oder an diesem angeordnet ist und eine zweite Widerlagerstelle über die Fahrwerksfeder gegen das andere Anschlusselement abgestützt ist.

Eine derartige Vorrichtung ist aus DE 201 05 329 U1 bekannt. Sie weist als Fahrwerksfeder eine Schraubenfeder auf, die an ihrem unteren Ende an einer radseitigen Aufnahme angreift und an ihrem oberen Ende gegen eine Spindelmutter eines Spindel-Getriebes abgestützt ist. Die Spindel des Getriebes ist an der Karosserie des Kraftfahrzeugs drehbar gelagert und zum Einstellen des Niveaus der Karosserie mit einem Elektromotor antreibbar. Außerdem weist die Vorrichtung eine Zusatzfeder auf, welche die aus der Fahrwerksfeder und dem Getriebe bestehende Anordnung überbrückt und die Fahrzeugkarosserie direkt gegen die radseitige Aufnahme abstützt. Die Zusatzfeder ist ebenfalls als Schraubenfeder ausgebildet und konzentrisch um die Fahrwerksfeder herum angeordnet. Der Elektromotor ist oberhalb der Fahrwerksfeder und der Zusatzfeder angeordnet. Die Spindel des Getriebes greift in den von den Windungen der Federn umgrenzten Raum ein. Die Vorrichtung hat den Nachteil, dass sie einen relativ großen Spindelweg aufweist, die einen entsprechend großen Bauraum im Inneren der Fahrwerksfeder und der Zusatzfeder erfordert, so dass der Elektromotor über den Federn angeordnet werden muss.

Es besteht deshalb die Aufgabe, eine Vorrichtung der eingangs genannten Art zu schaffen, die kompakte Abmessungen und eine hohe Tragkraft ermöglicht.

Diese Aufgabe wird dadurch gelöst, dass das Getriebe eine Windungen aufweisende Feder und zumindest ein zwischen mindestens zwei zueinander benachbarte Windungen eingreifendes Eingriffsmittel aufweist, dass die Getriebe-Feder der einen Widerlagerstelle und das Eingriffsmittel der anderen Widerlagerstelle zugeordnet ist, und dass die Getriebe-Feder und das Eingriffsmittel relativ zueinander verdrehbar gelagert und zum Verstellen des Abstands der Widerlagerstellen mit Hilfe des Antriebsmotors drehantreibbar sind.

Die Getriebe-Feder, die vorzugsweise bandförmig mit etwa rechteckigem Querschnitt ausgebildet ist, ermöglicht einerseits eine hohe Getriebeübersetzung, so dass der Antriebsmotor für das Getriebe entsprechend kompakte Abmessungen aufweisen kann. In vorteilhafter Weise ermöglicht die Getriebe-Feder aber auch die Abstützung großer Traglasten. Im Vergleich zu einem Spindel-Mutter-Getriebe hat das erfindungsgemäße Federbandgetriebe bei geringen Steigungen und hohen Traglasten einen höheren Wirkungsgrad. Außerdem kann das Federbandgetriebe sicher selbsthemmend ausgelegt werden.

Vorteilhaft ist, wenn der Antriebsmotor ein Elektromotor, insbesondere ein bürstenloser EC-Motor ist. Die Vorrichtung ermöglicht dadurch einen einfachen Aufbau, beim dem auf aufwendige Hydraulik- oder Pneumatik-Komponenten verzichtet werden kann. Der Elektromotor kann mit Hilfe einer Regelung, die einen Niveausensor aufweist, geregelt werden, um das Niveau der Karosserie bei unterschiedlichen Beladungen konstant zu halten und/oder an unterschiedliche Betriebsbedingungen, wie. z.B. Geländefahrt, Fahrt auf der Autobahn oder Landstraße, anzupassen. Dabei ist es sogar möglich, das Niveau der Karosserie an den einzelnen Achsen und/oder Rädern des Fahrzeugs jeweils separat zu regeln oder einzustellen.

Bei einer bevorzugten Ausführungsform der Erfindung ist der Antriebsmotor zumindest bereichsweise in dem von den Windungen der Getriebe-Feder umgrenzten Raum angeordnet. Die Vorrichtung ermöglicht dann noch kompaktere Abmessungen.

Der EC-Motor kann eine Ansteuereinrichtung für seine Wicklung aufweisen, die in dem von den Windungen der Getriebe-Feder umgrenzten Raum angeordnet ist. Die Vorrichtung ermöglicht dadurch eine noch kompaktere Bauform.

Bei einer vorteilhaften Ausführungsform der Erfindung ist das Getriebe als selbsthemmendes Getriebe ausgestaltet. Der Elektromotor braucht dann nur während der Verstellung des Getriebes bestromt zu werden.

Zweckmäßigerweise ist der Antriebsmotor als Außenläufer mit einem um einen Stator herum angeordneten Rotor ausgebildet, wobei das Eingriffsmittel am Außenumfang des Rotors vorgesehen ist. Die Einzelteile der Vorrichtung sind dann kostengünstig herstellbar und montierbar.

Bei einer anderen Ausführungsform der Erfindung ist der Antriebsmotor am Außenumfang der Getriebe-Feder vorzugsweise um diese herum angeordnet ist. Dabei kann der Antriebsmotor als Innenläufer mit einem um einen ringförmigen Rotor herum angeordneten Stator ausgebildet sein, so dass das Eingriffsmittel am Innenumfang des Rotors vorgesehen sein kann. Auch diese Ausführungsform der Vorrichtung lässt sich kostengünstig herstellen.

Besonders vorteilhaft ist, wenn die Fahrwerksfeder eine gewundene Feder, insbesondere eine Schrauben- oder Spiralfeder ist, und wenn der Antriebsmotor und/oder die Getriebe-Feder zumindest bereichsweise in dem von den Windungen der Fahrwerksfeder umgrenzten Raum angeordnet ist (sind). Die Vorrichtung weist dann besonders kompakte Abmessungen auf. Selbstverständlich sind aber auch andere Ausführungsformen denkbar, bei denen als Fahrwerksfeder eine Blattfeder und/oder eine Torsionsfeder vorgesehen sein können.

Bei einer bevorzugten Ausführungsform der Erfindung sind die Anschlusselemente über eine Axialführung relativ zueinander verschiebbar miteinander verbunden. Dabei ist die Axialführung bevorzugt parallel zur Längsachse der Getriebe-Feder angeordnet. In vorteilhafter Weise können über die Axialführung Kräfte, die quer zur Längsachse der Getriebe-Feder orientiert sind, zwischen dem radseitigen Anschlusselement und dem karosserieseitigen Anschlusselement übertragen werden. Somit werden der Antriebsmotor und die Getriebe-Feder weitestgehend von Querkräften freigehalten.

Zweckmäßigerweise weist die Axialführung eine auf einem Führungszapfen verschiebbar angeordnete Führungshülse auf, wobei der Antriebsmotor und/oder die Getriebe-Feder um die Führungshülse herum angeordnet ist (sind). Die Vorrichtung ermöglicht dann besonders kompakte Abmessungen.

Bei einer anderen Ausführungsform der Erfindung weist die Axialführung eine innere Führungshülse und eine relativ dazu verschiebbare äußere Führungshülse auf, wobei der Antriebsmotor und/oder die Getriebe-Feder zumindest bereichsweise in dem von der inneren Führungshülse umgrenzten Raum angeordnet ist (sind). Eine solche Vorrichtung wird bevorzugt an Stellen eingesetzt, an denen genügend Baurum zur Verfügung steht.

Vorteilhaft ist, wenn die Verstelleinrichtung ein etwa hutförmiges Gehäuseteil aufweist, in dessen Innenhöhlung die Getriebe-Feder und der Antriebsmotor vorgesehen sind, dass Gehäuseteil in den von den Windungen der Fahrwerksfeder umgrenzten Raum eingreift, und dass die zweite Widerlagerstelle der Verstelleinrichtung am Außenrand des Gehäuseteils angeordnet ist und vorzugsweise eine Einformung zur Aufnahme eines Axialendes der Fahrwerksfeder aufweist. Das Gehäuseteil lässt sich dann kostengünstig als Biegestanzteil aus Blech herstellen.

Zweckmäßigerweise ist der Führungszapfen vorzugsweise etwa mittig derart am Boden des hutförmigen Gehäuseteils angeordnet, dass er in die in Innenhöhlung des Gehäuseteils hineinragt. Der Führungszapfen kann dann biegesteif mit dem hutförmigen Gehäuseteil verbunden sein, beispielsweise durch eine Schweißnaht oder eine Pressstelle. Der Führungszapfen ist mit seiner Längsachse vorzugsweise etwa parallel zur Längsachse des Gehäuseteils orientiert. Die symmetrische Anordnung des Führungszapfens an dem Gehäuseteil ermöglicht eine einfache Fertigung und Montage der Teile. Der Führungszapfen kann massiv oder als rohrförmiger Hohlkörper ausgebildet sein.

Bei einer vorteilhaften Ausgestaltung der Erfindung ist mit der Führungshülse ein sich quer zu deren Längsachse erstreckender Flansch verbunden, wobei der Außenrand des Flanschs über eine elastische Dichtmanschette, insbesondere einen Falten- oder Rollbalg, mit dem Au-βenrand des hutförmigen Gehäuseteils verbunden ist. Die in der Innenhöhlung des hutförmigen Gehäuseteils befindlichen Teile der Vorrichtung sind dann durch das Gehäuseteil, den Flansch und die Dichtmanschette gegen den außerhalb der Vorrichtung befindlichen Raum abgedichtet und somit gegen den Zutritt von Feuchtigkeit und/oder Verschmutzung geschützt. Die Innenhöhlung des hutförmigen Gehäuseteils kann ggf. mit Öl befüllt sein, um die Reibung insbesondere zwischen der Getriebe-Feder und dem Eingriffsmittel zu reduzieren. Als Dichtmanschette ist vorzugsweise ein Falten- oder Rollbalg vorgesehen.

Vorteilhaft ist, wenn von dem Eingriffsmittel beabstandete Windungen der Getriebe-Feder im Wesentlichen auf Anschlag angeordnet sind. Dies ermöglicht eine kurze Bauform der Vorrichtung.

Bei einer bevorzugten Ausgestaltung der Erfindung weist das zumindest eine Eingriffsmittel eine Achse auf, auf der vorzugsweise mittels einer Wälzlagerung eine Rolle derart drehbar gelagert ist, dass sie beim Verdrehen des Eingriffsmittels relativ zu der Getriebe-Feder auf dieser abrollt. Dadurch wird beim Verstellen des Getriebes die Reibung zwischen dem Eingriffsmittel und der Getriebe-Feder reduziert. Der Antriebsmotor kann dann noch kompaktere Abmessungen aufweisen.

Besonders vorteilhaft ist, wenn die Vorrichtung mehrere Eingriffsmittel aufweist, die derart entlang einer Windung der Getriebe-Feder zueinander versetzt sind, dass die Eingriffsmittel gleichzeitig an der Windung angreifen. Über das Getriebe können dann noch größere Axialkräfte übertragen werden. Die Eingriffsmittel sind vorzugsweise über den gesamten Umfang der Getriebe-Feder verteilt, so dass Axialkräfte gleichmäßig und vorzugsweise etwa symmetrisch über der Umfang der Getriebe-Feder verteilt von dem karosserieseitigen zweiten Anschlusselement zu dem radseitigen erste Anschlusselement übertragen werden können.

Zweckmäßigerweise sind die Achsen der Rollen von mindestens zwei in Umfangsrichtung der Getriebe-Feder nebeneinander angeordneten, zwischen die Windungen der Getriebe-Feder eingreifenden Rollen derart quer zur Umfangsrichtung zueinander versetzt, dass eine erste Rolle oder eine erste Gruppe von Rollen nur an der einen und eine zweite Rolle oder eine zweite Gruppe von Rollen nur an der anderen Windung angreift. Der Abstand oder die lichte Weite zwischen den beiden Windungen ist dann größer als der Durchmesser der Rollen, so dass die Rollen jeweils nur mit einer der beiden Feder-Windungen in Kontakt geraten. Die Vorrichtung weist dann beim Einstellen des Niveaus der Karosserie noch geringere Reibungsverluste auf.

Bei einer bevorzugten Ausgestaltung der Erfindung weist die Vorrichtung ein zu der Getriebe-Feder etwa konzentrisch angeordnetes, mit dem Antriebsmotor in Antriebsverbindung stehendes Hülsenelement auf, das an seinem einen Ende einen etwa U-förmig umgebogenen Randbereich hat, der zwei durch einen U-Quersteg miteinander verbundene U-Schenkel hat, wobei die U-Schenkel mindestens zwei in radialer Richtung zueinander fluchtende Lageröffnungen haben, in welche die Achse des mindestens einen Eingriffselements eingesetzt ist, wobei auf der Achse zwischen den U-Schenkeln die Rolle angeordnet ist, wobei in dem U-Quersteg eine Durchtrittsöffnung für die Rolle vorgesehen ist, und wobei die Rolle durch die Durchtrittsöffnung hindurch an der Windung der Getriebe-Feder angreift. Das Hülsenelement weist dann eine hohe Biegesteifigkeit auf und kann als Biegestanzteil kostengünstig aus einem Rohr hergestellt werden.

Das Hülsenelement ist vorzugsweise mittels einer Wälz- und/oder Gleitlagerung um seine Längsachse verdrehbar auf der Führungshülse gelagert. Dadurch können beim Verstellen der Vorrichtung die Reibungsverluste noch weiter reduziert werden.

Vorteilhaft ist, wenn zur seitlichen Führung der Windungen der Getriebe-Feder, die bei einer Beaufschlagung der Anschlusselemente mit einer Kraft vom Kraftfluss durchsetzt sind, ein Führungsrohr vorgesehen ist, das vorzugsweise mit seiner Außenmantelfläche der Innenseite der Windungen zugewandt ist. Durch das Führungsrohr wird beim Auftreten einer Traglast zwischen dem karosserieseitigen zweiten Anschlusselement zu dem radseitigen erste Anschlusselement ein seitliches Ausweichen der mit der Traglast beaufschlagten Windungen der Getriebe-Feder vermieden. Die Vorrichtung ermöglicht dadurch bei kompakten Abmessungen in Längsrichtung der Getriebe-Feder die Übertragung großer Traglasten.

Vorteilhaft ist, wenn die Vorrichtung zusätzlich zu der Fahrwerksfeder eine Zusatzfeder aufweist, welche die Anschlusselemente direkt oder indirekt über mindestens ein Zwischenelement miteinander verbindet. Die Zusatzfeder kann dann zur Abstützung des Leergewichts der Karosserie ausgebildet sein, so dass das Getriebe der Vorrichtung nur die Zuladung abstützen muss. Die Zusatzfeder kann eine gewundene Feder, beispielsweise eine Schrauben-, Tonnen- oder Miniblockfeder, eine Blatt- und/oder Torsionsfeder sein.

Vorzugsweise beträgt die Federsteifigkeit der Zusatzfeder zwischen 30% und 60% der resultierenden Gesamtfedersteifigkeit der Fahrwerksfeder und der Zusatzfeder. Diese Auslegung der Federn hat sich in der Praxis als zweckmäßig erwiesen.

Nachfolgend sind Ausführungsbeispiele der Erfindung anhand der Zeichnung näher erläutert.

### Es zeigen:

- Fig. 1 und 2: einen Längsschnitt durch eine an einem Kraftfahrzeug angeordnete Vorrichtung zur Federung und Niveaueinstellung,
- Fig. 3: einen Teillängsschnitt durch ein erstes Ausführungsbeispiel einer Vorrichtung zur Federung und Niveaueinstellung bei Kraftfahrzeugen, die die in ihrem Abstand zueinander verstellbare Widerlagerstellen zum Verbinden mit einer Fahrwerksfeder und der Karosserie des Kraftfahrzeugs aufweist,
- Fig. 4: einen Darstellung ähnlich Fig. 3, wobei jedoch der Abstand der Widerlagerstellen gegen über Fig. 3 vergrößert ist,
- Fig. 5a: eine schematische Darstellung einer an einem Kraftfahrzeug angeordneten Vorrichtung zur Federung und Niveaueinstellung, wobei das Kraftfahrzeug unbeladen ist,
- Fig. 5b: eine Darstellung ähnlich Fig. 5a, wobei jedoch das Kraftfahrzeug beladen ist,
- Fig. 5c: eine Darstellung ähnlich Fig. 5b, wobei jedoch die durch die Ladung des Kraftfahrzeugs bewirkte Verkürzung der Fahrwerksfeder durch entsprechendes Verstellen der Vorrichtung zur Niveaueinstellung kompensiert ist,
- Fig. 6: einen Längsschnitt durch ein zweites Ausführungsbeispiel einer Vorrichtung zur Federung und Niveaueinstellung bei Kraftfahrzeugen,
- Fig. 7: eine Getriebe-Feder, zwischen deren Windungen Eingriffsmittel eingreifen,
- Fig. 8: eine Seitenansicht der in Fig. 7 gezeigten Anordnung,
- Fig. 9: ein Hülsenelement mit den daran angeordneten des Eingriffsmitteln für die Getriebe-Feder,
- Fig. 10: einen vergrößerten Ausschnitt von Fig. 9, auf dem die Eingriffsmittel besonders gut erkennbar sind,
- Fig. 11: eine Seitenansicht des Hülsenelements mit den Eingriffsmitteln,

- Fig. 12: einen Längsschnitt durch das Hülsenelement entlang der in Fig. 11 mit B bezeichneten Schnittebene,

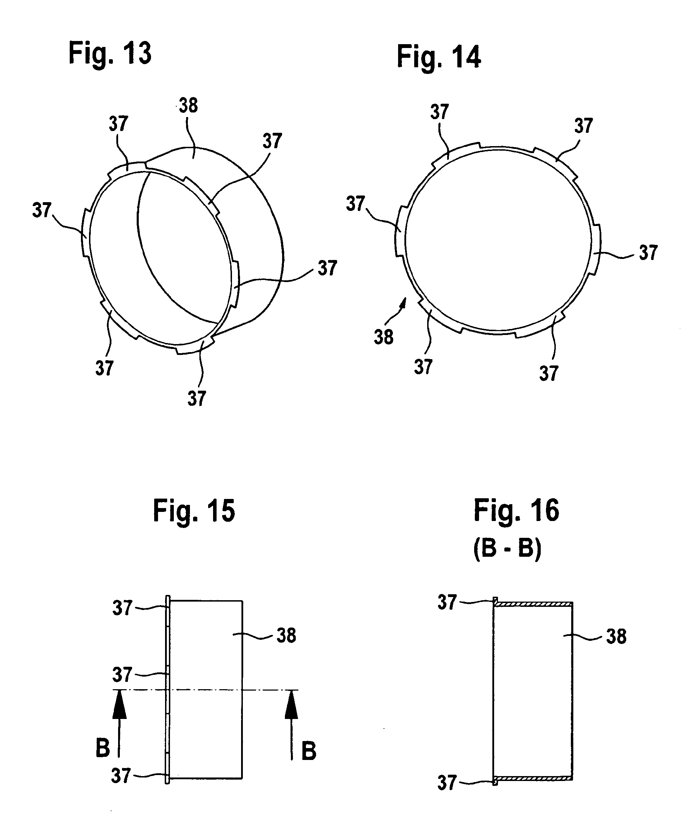

- Fig. 13: ein dreidimensionale Ansicht eines Rotorteils eines Elektromotors,
- Fig. 14: eine Aufsicht auf das Rotorteil,
- Fig. 15: eine Seitenansicht des Rotorteils,
- Fig. 16: einen Längsschnitt durch das Rotorteils entlang der in Fig. 15 mit B bezeichneten Ebene,
- Fig. 17a: eine Darstellung ähnlich Fig. 5a, wobei jedoch zusätzlich zu der in Fig. 5a gezeigten Fahrwerksfeder eine Zusatzfeder vorgesehen ist, und wobei das Rad durch eine Ersatzfeder dargestellt ist,
- Fig. 17b: eine Darstellung ähnlich Fig. 17a, wobei jedoch das Kraftfahrzeug beladen ist,
- Fig. 17c: eine Darstellung ähnlich Fig. 17b, wobei jedoch die durch die Ladung des Kraftfahrzeugs bewirkte Verkürzung der Fahrwerksfeder durch entsprechendes Verstellen der Vorrichtung zur Niveaueinstellung kompensiert ist und
- Fig. 18: ein weiteres Ausführungsbeispiel einer Verstelleinrichtung.

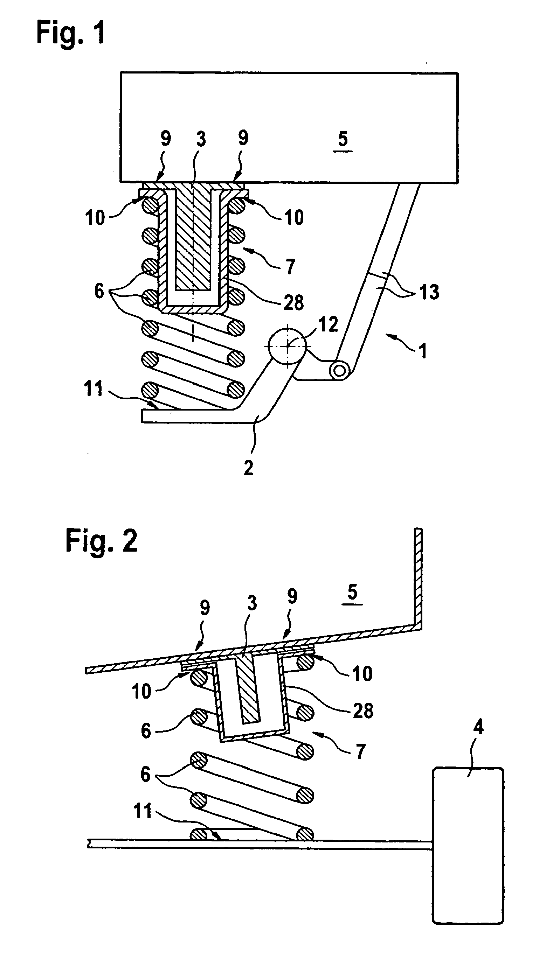

Eine in Fig. 1 und 2 im Ganzen mit 1 bezeichnete Vorrichtung zur Federung und Niveaueinstellung bei Kraftfahrzeugen hat ein erstes Anschlusselement 2 zum Verbinden mit mindestens einem Fahrzeugrad 4 und ein zweites Anschlusselement 3 zum Verbinden mit der Karosserie 5 des Kraftfahrzeugs. Die Karosserie 5 ist in der Zeichnung nur schematisch dargestellt.

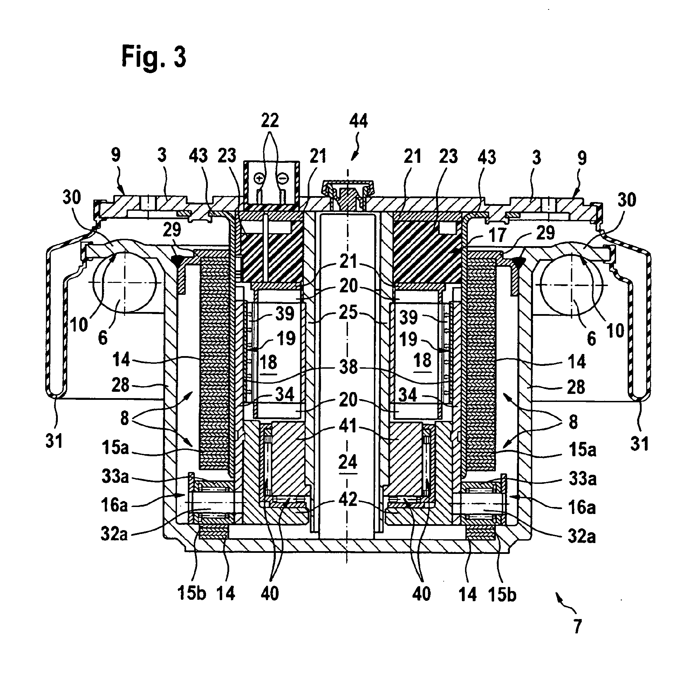

Ferner weist die Vorrichtung 1 eine Fahrwerksfeder 6 und eine Verstelleinrichtung 7 auf, die zwei mittels eines motorisch angetriebenen Getriebes 8 (Fig. 3) in ihrem Abstand zueinander verstellbare Widerlagerstellen 9, 10 hat. Eine erste Widerlagerstelle 9 ist an dem zweiten Anschlusselement 3 angeordnet und eine zweite Widerlagerstelle 10 ist über die Fahrwerksfeder 6 gegen das erste Anschlusselement 2 abgestützt. Mit Hilfe der Verstelleinrichtung 7 kann der Abstand der Karosserie 5 zum Erdboden eingestellt werden. Bei den in der Zeichnung gezeigten Ausführungsbeispielen ist die Fahrwerksfeder 6 als Schraubenfeder ausgebildet. Anstelle der Schraubenfeder kann aber auch eine Blattfeder vorgesehen sein.

Bei dem in Fig. 1 gezeigten Ausführungsbeispiel ist an dem ersten Anschlusselement 2 eine Auflagestelle 11 für das untere Ende der Fahrwerksfeder 6 vorgesehen, die unterhalb der Radachse 12 des Fahrzeugrads 4 angeordnet und seitlich von dieser beabstandet ist. Mit Abstand von der Radachse 12 ist das erste Anschlusselement 2 über einen Stoßdämpfer 13 gegen die Karosserie 5 abgestützt. Der Stoßdämpfer 13 ist an seinem einen Ende verschwenkbar mit dem ersten Anschlusselement 2 und an seinem anderen Ende verschwenkbar mit der Karosserie 5 verbunden. Bei dem Ausführungsbeispiel gemäß Fig. 2 ist die Auflagestelle 11 für die Fahrwerksfeder 6 oberhalb der Radachse 12 angeordnet. Beim Ein- und Ausfedern bewegt sich die Achse 12 zusammen mit dem Anschlusselement 2 in vorzugsweise etwa vertikaler Richtung relativ zu der Karosserie 5. In Fig. 2 ist das die Auflagestelle 11 aufweisende erste Anschlusselement 2 der Einfachheit halber nicht näher dargestellt. Das Fahrzeugrad 4 ist an einem in der Zeichnung nicht näher dargestellten Radträger angeordnet, der über Lenker mit der Karosserie 5 verbunden ist.

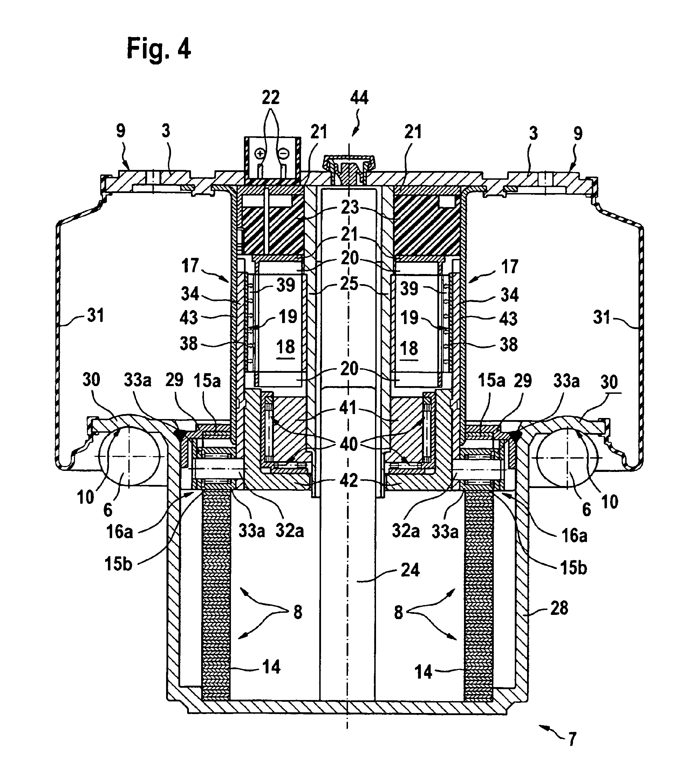

Wie in Fig. 3 und 4 besonders gut erkennbar ist, hat das Getriebe 8 der Verstelleinrichtung 7 eine gewundene Feder 14, nämlich eine Schraubenfeder, die eine Vielzahl von Windungen aufweist. Zwischen zwei zueinander benachbarte, in axialer Richtung der Getriebe-Feder 14 durch einen Freiraum voneinander beabstandete Windungen 15a, 15b greifen mehrere über den Umfang der Getriebe-Feder 14 verteilt angeordnete Eingriffsmittel 16a, 16b ein.

Deutlich ist erkennbar, dass die Windungen einen etwa rechteckigen Querschnitt haben und dass die von dem Freiraum beabstandeten Windungen der Getriebe-Feder im Wesentlichen auf Anschlag angeordnet sind. Dabei liegen zueinander benachbarte Windungen mit ihren einander zugewandten Flachseiten aneinander an. Die Getriebe-Feder ist aus einem Metallband, vorzugsweise einem Stahlband hergestellt, das bei der Herstellung schraubenlinienförmig gewunden wird.

Die Getriebe-Feder 14 ist der gegen die Fahrwerksfeder 6 abgestützten zweiten Widerlagerstelle 10 und die Eingriffsmittel 16a, 16b sind der ersten Widerlagerstelle 9 zugeordnet. Zum Verstellen des Abstands der Widerlagerstellen 9, 10 sind die Getriebe-Feder 14 einerseits und die Eingriffsmittel 16a, 16b andererseits relativ zueinander verdrehbar gelagert und mittels eines Antriebsmotors 17 drehantreibbar.

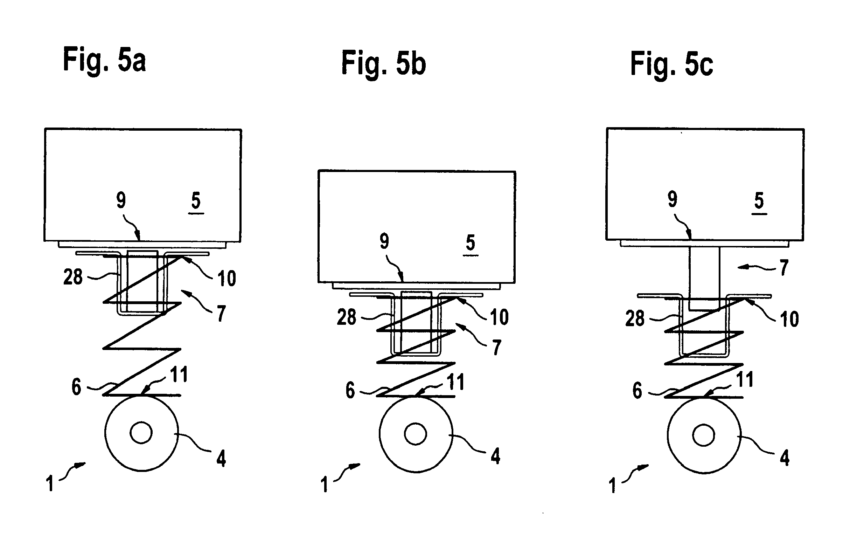

Die Anschlusselemente 2, 3 befinden sich bei unbeladener Karosserie in einer Ausgangslage, in der sie in geringem Abstand zueinander angeordnet sind oder aufeinander liegen. Durch einen Vergleich von Fig. 5a und Fig. 5b ist erkennbar, dass die Fahrwerksfeder 6 bei Beladung der Karosserie 5 einfedert, wodurch der Abstand der Karosserie 5 zum Erdboden, der nachstehend auch als Niveau bezeichnet wird, abnimmt. Diese Abstandsreduzierung wird mit Hilfe eines Sensors gemessen, um die Verstelleinrichtung 7 derart anzusteuern, dass die Abstandsreduzierung abnimmt. Durch einen Vergleich von Fig. 5a und Fig. 5c ist erkennbar, dass nach dem Ansteuern der Verstelleinrichtung 7 das Niveau der beladenen Karosserie 5 etwa dem Niveau der unbeladenen Karosserie 5 entspricht, d.h. die durch das Beladen der Karosserie bewirkte Abnahme der Länge der Fahrwerksfeder 6 wird durch die Verstelleinrichtung 7 kompensiert. Das Niveau der Karosserie 5 wird also mit Hilfe der Verstelleinrichtung 7 auf einen konstanten, von der Beladung weitgehend unabhängigen Wert geregelt.

Als Antriebsmotor 17 ist ein bürstenloser, elektronisch kommutierter Elektromotor (EC-Motor) vorgesehen, der bei den in Fig. 3 und 4 gezeigten Ausführungsbeispielen zumindest bereichsweise in dem von den Windungen der Getriebe-Feder 14 umgrenzten Raum angeordnet ist. In Fig. 3 ist erkennbar, dass der Antriebsmotor 17 in einer Ausgangslage, in der die Eingriffsmittel 16a, 16b an der von der ersten Widerlagerstelle 9 entfernten Endbereich der Getriebe-Feder 14 angeordnet sind, nahezu vollständig innerhalb der Getriebe-Feder 14 angeordnet ist.

Der Antriebsmotor 17 ist als Außenläufer mit einem um einen Stator 18 und einem um diesen herum angeordneten Rotor 19 ausgebildet. Der Stator 18 hat an seinem Außenumfang mehrere in Umfangsrichtung zueinander versetzte Zähne, die in an sich bekannter Weise mit einer mehrpoligen Wicklung 20 bewickelt sind. Die Wicklung 20 ist über mindestens eine Leiterplatte 21, auf der elektronische Bauelemente für eine Ansteuerelektronik zur Kommutierung der Wicklung angeordnet sein können, mit elektrischen Anschlüssen 22 verbunden. Bei dem Ausführungsbeispiel gemäß Fig. 3 und 4 sind zwei dieser Leitplatten 21 etwa parallel zueinander angeordnet, und zwar zwischen dem zweiten Anschlusselement 3 und dem Stator 19. Selbstverständlich kann die Ansteuereinrichtung für die Kommutierung aber auch separat außerhalb des Gehäuses des Getriebes 8 angeordnet sein.

Die Leitplatten 21 erstrecken sich in Ebenen, die etwa normal zur Rotationsachse des Antriebsmotors 17 orientiert sind. Zwischen den Leitplatten 21 ist eine elektrische Isolierschicht 23 vorgesehen, die vorzugsweise aus Kunststoff besteht. In Fig. 1, 3 und 4 ist erkennbar, dass die elektrischen Anschlüsse 22 an der an dem ersten Anschlusselement 2 abgewandten Vorderseite des zweiten Anschlusselements 3 angeordnet sind. Das Anschlusselement 3 weist einen Flansch auf, der Öffnungen hat, die in Gebrauchsstellung über in der Zeichnung nicht näher dargestellte Verbindungselemente, wie z.B. reib- und/oder formschlüssige Kunststoffauflager, fest mit der Karosserie verbunden sind. Dabei ist an der Karosserie eine Öffnung für die elektrischen Anschlüsse 22 vorgesehen.

Die Anschlusselemente 2, 3 sind über eine Axialführung in Richtung der Längsachse der Getriebe-Feder 14 relativ zueinander verschiebbar miteinander verbunden. Bei den in Fig. 3 und 4 gezeigten Ausführungsbeispielen hat die Axialführung einen Führungszapfen 24 und eine darauf angeordnete Führungshülse 25. Der Führungszapfen 24 ist an dem ersten Anschlusselement 2 und die Führungshülse 25 an dem zweiten Anschlusselement 3 angeordnet. Der Stator 18, der Rotor 19 und die Getriebe-Feder 14 sind etwa konzentrisch zu dem Führungszapfen 24 angeordnet.

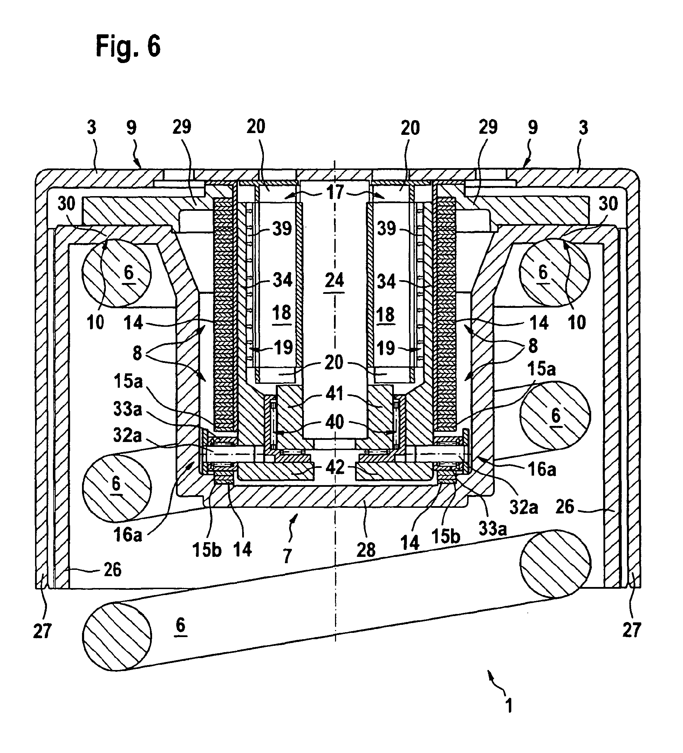

Bei dem in Fig. 6 gezeigten Ausführungsbeispiel weist die Axialführung eine innere Führungshülse 26 und eine relativ dazu verschiebbare äußere Führungshülse 27 auf. Die innere Führungshülse 26 ist mit dem ersten Anschlusselement 2 und die äußere Führungshülse 27 mit dem zweiten Anschlusselement 3 verbunden. Das zweite Anschlusselement 3 ist topfförmig ausgebildet. Der Antriebsmotor 17 und die Getriebe-Feder 14 sind zumindest bereichsweise in dem von der inneren Führungshülse 26 umgrenzten Raum angeordnet. Die äußeren Radialkräfte sind von den durch den Antriebsmotor 17 aufgebrachten Kräften und von den Reibungskräften an den Windungen der Getriebe-Feder 14 entkoppelt.

Bei dem Ausführungsbeispiel nach Fig. 3 und 4 hat die Verstelleinrichtung 7 ein etwa die Form eines umgekehrten Huts aufweisende Gehäuseteil 28, in dessen Innenhöhlung die Getriebe-Feder 14 und der Antriebsmotor 17 vorgesehen sind. Dabei ist die Getriebe-Feder an ihrem einen Ende gegen den Boden des Gehäuseteils 28 und an ihrem anderen Ende gegen ein mit dem Gehäuseteil 28 fest verbundenen Deckelteil 29 abgestützt. Das Deckelteil 29 ist mit dem Gehäuseteil 28 verschweißt, verklebt und/oder verpresst. Die Federenden des Federbandes laufen in Umfangsrichtung an dem Deckelteil 29 und dem Gehäuseteil 28 jeweils gegen einen Absatz. Durch dieses Fangen der Getriebe-Feder 14 zwischen den Absätzen und gleichzeitiger axialer Vorspannung kann das durch die Eingriffsmitte 16a, 16b eingebrachte Drehmoment gegen das Deckelteil 29 bzw. das Gehäuseteil 28 abgestützt werden.

Das Gehäuseteil 28 greift in den von den Windungen der Fahrwerksfeder 6 umgrenzten Raum ein. Die zweite Widerlagerstelle 10 ist am Außenrand des Gehäuseteils 28 angeordnet und weist eine Einformung 30 zur Aufnahme der obersten Windung der Fahrwerksfeder 6 auf. Der Führungszapfen 24 ist etwa mittig am Boden des hutförmigen Gehäuseteils 28 angeordnet und ragt in die in Innenhöhlung des Gehäuseteils 28 hinein.

Etwa parallel zu dem die Einformung 30 aufweisenden Randbereich des Gehäuseteils 28 ist der mit der Führungshülse 25 verbundene Flansch des zweiten Anschlusselements 3 angeordnet. Der Außenrand des Flanschs ist über eine als Faltenbalg ausgebildete elastische Dichtmanschette 31 mit dem Außenrand des hutförmigen Gehäuseteils verbunden. Die Luftdruckänderung in der von dem Balg abgedichteten Innenhöhlung beim Verstellen Getriebes 8 kann durch die Verformung des Balgs ausgeglichen werden. Es kann aber auch -wie bei dem Ausführungsbeispiel in Fig. 3 und 4 - eine Entlüftungseinrichtung 44 vorgesehen sein.

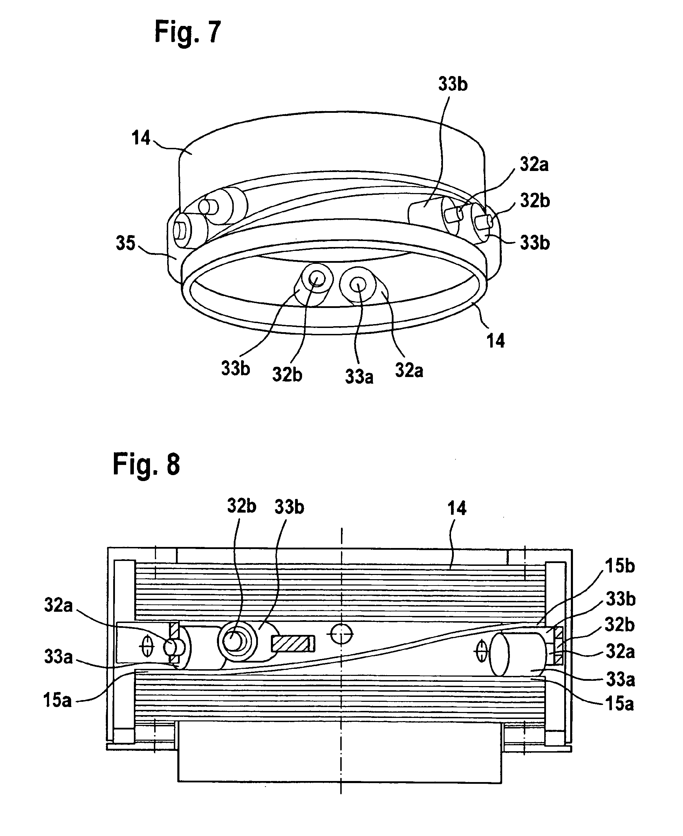

Wie in Fig. 7 und 8 besonders gut erkennbar ist, weisen Eingriffsmittel 16a, 16b jeweils eine Achse 32a, 32b auf, auf der mittels einer Wälzlagerung eine Rolle 33a, 33b derart drehbar gelagert ist, dass sie beim Verdrehen des Rotors 19 auf der Getriebe-Feder 14 abrollt. Deutlich ist erkennbar, dass die Rollen 33a, 33b derart entlang einer Windung der Getriebe-Feder zueinander versetzt sind, dass mehrere Rollen 33a, 33b gleichzeitig an der Windung angreifen.

Die Achsen 32a, 32b der Rollen 33a, 33b von mehreren seitlich zueinander benachbarten, zwischen dieselben Windungen der Getriebe-Feder 14 eingreifenden Rollen 33a, 33b sind derart quer zur Erstreckungsrichtung der Windungen zueinander versetzt, dass eine erste Gruppe von Rollen 33a nur an der Oberseite und eine zweite Gruppe von Rollen 33b nur an der Unterseite der Windung angreift.

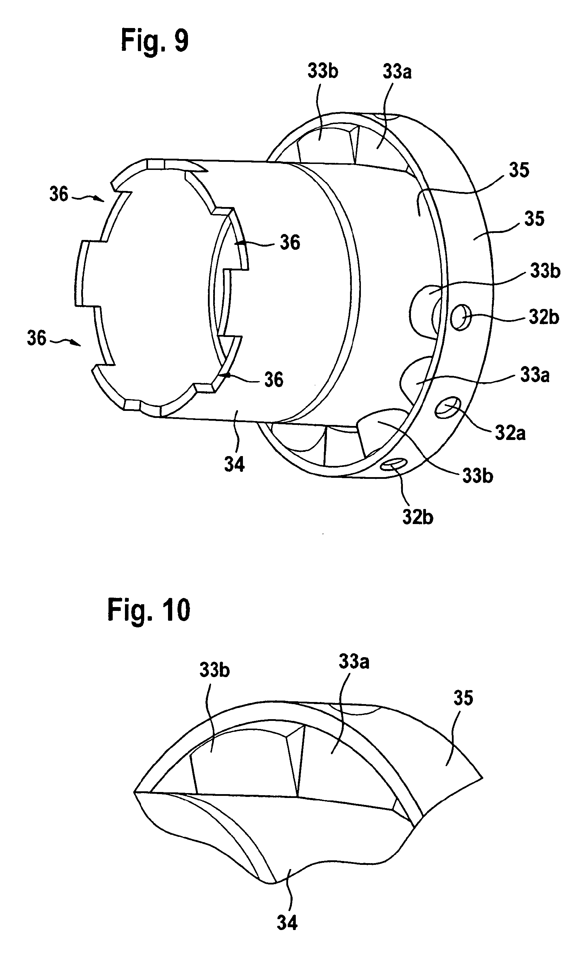

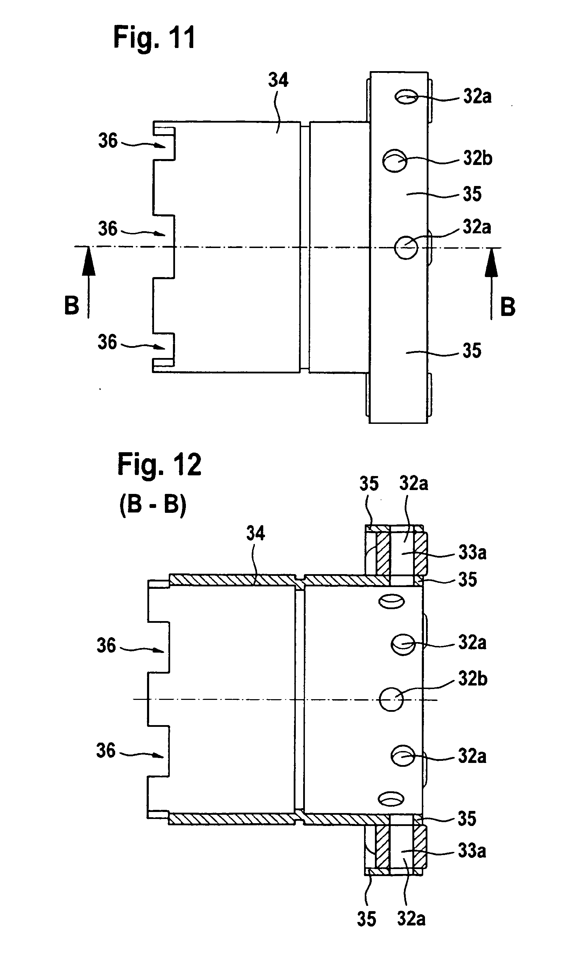

Die Verstelleinrichtung 7 weist ein zu der Getriebe-Feder 14 etwa konzentrisch angeordnetes, mit dem Antriebsmotor 17 in Antriebsverbindung stehendes Hülsenelement 34 auf, das an seinem einen Ende einen etwa U-förmig umgebogenen Randbereich hat (Fig. 9 bis 12), der zwei durch einen U-Quersteg miteinander verbundene U-Schenkel 35 aufweist. Die U-Schenkel 35 haben für jede Achse 32a, 32b zwei in radialer Richtung zueinander fluchtende Lageröffnungen, in welche die betreffende Achse 32a, 32b eingesetzt ist. Die der Achse 32a, 32b zugeordnete die Rolle 33a, 33b ist zwischen den U-Schenkeln 35 angeordnet. In dem U-Quersteg ist jeweils für die Rollen 33a, die an der der Stirnseite des Hülsenelements 34 zugewandten Windung der Getriebe-Feder 14 angreifen, eine Durchtrittsöffnung für die Rolle 33a vorgesehen.

An ihrem von den U-Schenkel 35 entfernen Ende hat das Hülsenelement 34 kronenförmig angeordnete Aussparungen 36, in die Vorsprünge 37 eines konzentrisch zu dem Hülsenelement 34 in dessen Innenhöhlung angeordneten dünnwandigen Rotorteils 38 formschlüssig eingreifen. An der Innenmantelfläche des Rotorteils 38 sind Permanentmagnete 39 angeordnet, die über einen Luftspalt mit der Wicklung 20 des Stators 18 magnetisch zusammenwirken. Die Permanentmagnete 39 sind auf die Innenwand des Rotorteils 38 aufgeklebt. Das Rotorteil 38 kann dann zusammen mit den Permanentmagneten 39 als vormontierte überprüfbare Einheit an dem Hülsenelement 34 montiert werden. Es ist auch möglich, die Permanentmagneten 39 direkt auf das Hülsenelement 34 zu kleben.

Das Hülsenelement 34 kann aus einem gezogenen Rohr gefertigt werden, das an einem Ende über eine U-Form umgelenkt wird. An dem U-Quersteg werden dann die Durchtrittsöffnungen für die Rollen 33a ausgestanzt. Das Teil wird dadurch versteift. Außerdem ist die Herstellung einfacher als bei einem gefrästen Teil. Die Lageröffnungen für die Achsen 32a, 32b werden in das schon umgelenkte Teil eingebracht, um die Toleranzen klein zu halten. Damit die Windung der Getriebe-Feder 14 nicht am U-Quersteg schleift, wird die Lageröffnung in axialer Richtung derart angeordnet, dass die Rollen 33a durch die Durchtrittsöffnungen hindurch zu der Windung hin über den U-Quersteg überstehen.

Zwischen dem Hülsenelement 34 und der Führungshülse 25 ist eine Wälzlagerung 40 vorgesehen, die derart ausgebildet ist, dass sie axiale und radiale Kräfte von dem Rotorteil 38 auf die Führungshülse 25 überträgt. Die Wälzlagerung 40 kann direkt auf der Führungshülse 25 und dem Rotorteil 38 montiert sein oder sich auf mindestens ein Zwischenteil abstützen.

Bei den in Fig. 3, 4 und 6 gezeigten Ausführungsbeispielen sind als Zwischenteile ein inneres Abstützteil 41 und ein äußeres Abstützteil 42 vorgesehen. Das innere Abstützteil 41 wird bei der Fertigung des Getriebes 8 auf die Führungshülse 25 aufgepresst. Die Abstützteile 41, 42 können gehärtet sein und gleichzeitig als Laufbahn für die Wälzlager dienen. Eine andere kostengünstigere Lösung wäre es, das axiale Wälzlager auf einer Lagerscheibe laufen zu lassen, um eine Wärmebehandlung bei dem inneren Abstützteil 41 einzusparen. Wegen der geringen Drehzahl und der relativ kleinen Radialkräfte kann die radiale Wälzlagerung auch als Gleitlager ausgeführt werden.

Zur seitlichen Führung der Windungen der Getriebe-Feder 14 ist ein Führungsrohr 43 vorgesehen, das mit seiner Außenmantelfläche der Innenseite dem Innenumfang der Getriebe-Feder 14 zugewandt ist. Das Führungsrohr 43 ist mit dem zweiten Anschlusselement 3 fest verbunden, beispielsweise vernietet oder verschraubt. Zwischen der äußeren Fläche des Führungsrohrs 43 und der Innenumfangsfläche der Getriebe-Feder 14 ist ein radialer Spalt vorgesehen, wodurch ein Schleifen der Getriebe-Feder 14 an dem Führungsrohr 43 weitgehend vermieden wird. Das Führungsrohr 43 könnte auch am Außenumfang der Getriebe-Feder 14 angeordnet sein, würde dann aber mehr Bauraum benötigen. In Fig. 3 und 4 ist erkennbar, dass das Führungsrohr 43 nur die Windungen der Getriebe-Feder 14 führt, die bei einer Beaufschlagung der Anschlusselemente 2, 3 mit einer Kraft vom Kraftfluss durchsetzt sind. Für die übrigen Windungen der Getriebe-Feder 14 ist eine Führung nicht notwendig. Zwischen dem Führungsrohr 43 und dem Deckelteil 29 kann eine Dichtung vorgesehen sein.

Erwähnt werden soll noch, dass der Boden des Gehäuseteils 28 mit Öl gefüllt sein kann. Die Höhe des Ölstands ist dabei zweckmäßigerweise so gewählt, dass die Rollen 33a, 33b zumindest in ihrer untersten Position mit dem Öl in Kontakt geraten.

Die Abdichtung der Antriebsmotors 17 kann an unterschiedlichen Stellen vorgesehen sein. Wenn die Wälzlagerung 40 Schrägkugellager oder Nadellager aufweist, kann auf der auf der Motorseite ein abgedichtetes Lager vorgesehen sein. Es ist auch möglich, einen zusätzlichen Lippendichtring oder eine andere Dichtungseinheit vorzusehen. Als Abdichtung zwischen dem Rotorteil 38 und dem Führungsrohr 43 kann ein Lippendichtring, eine Labyrinthdichtung oder dergleichen Dichtelement vorgesehen sein. Ein Lippendichtung könnte auch direkt auf das Führungsrohr 43 gespritzt sein. Ferner könnte zwischen dem Rotorteil 38 und dem Führungsrohr 43 ein dichtes Sperrfett angeordnet sein. Wenn die radiale Lagerung eine Gleitlagerung ist, kann die Dichtung entfallen.

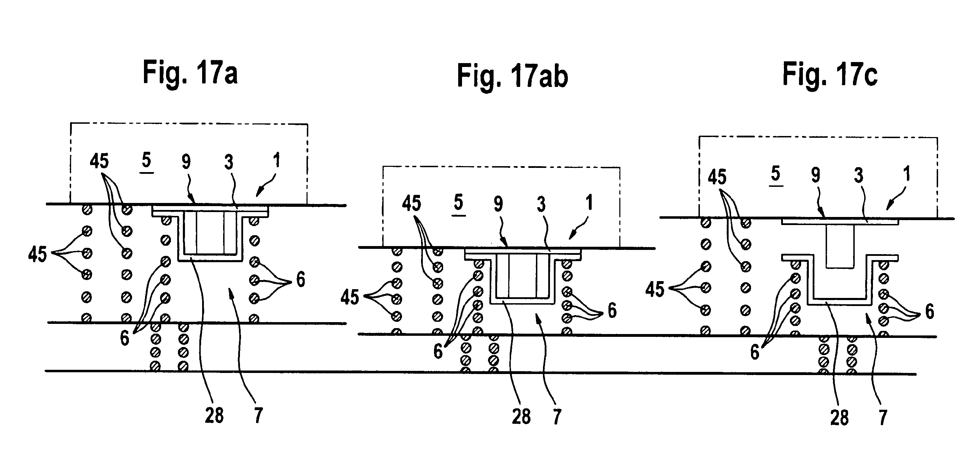

Bei den in Fig. 17a, 17b und 17c gezeigten Ausführungsbeispielen weist die Vorrichtung zusätzlich zu der Fahrwerksfeder 6 eine Zusatzfeder 45 auf, die parallel zu der aus der Verstelleinrichtung 7 und der Fahrwerksfeder 6 gebildeten Anordnung geschaltet ist und die Anschlusselemente 2, 3 gegeneinander abstützt. Diese Zusatzfeder 45 kann auch als Blattfeder ausgebildet sein. Die Federsteifigkeit der Fahrwerksfeder 6 beträgt zwischen 30% und 60% der resultierenden Gesamtfedersteifigkeit der Fahrwerksfeder 6 und der dazu parallel geschalteten Zusatzfeder 45.

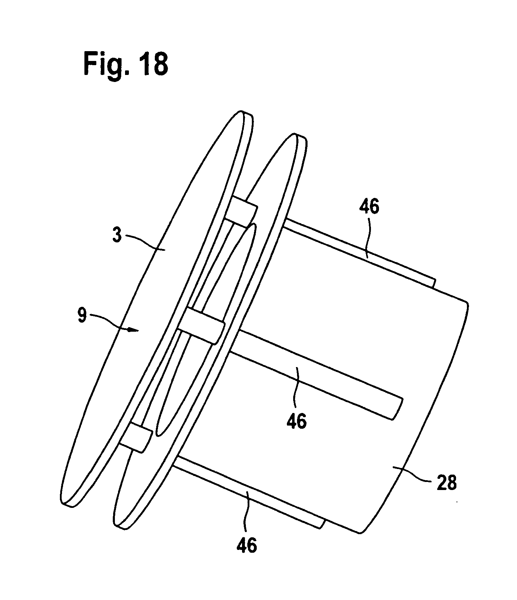

Erwähnt werden soll noch, dass die die Anschlusselemente 2, 3 miteinander verbindende Axialführung auch mehre am über den Umfang des Getriebes 8 verteilt angeordnet Führungsstangen 46 aufweisen kann, wie dies in Fig. 18 beispielhaft angedeutet ist. Dabei durchsetzen die Führungsstangen 46 dazu passende Öffnungen im Rand des Gehäuseteils 28.

### Bezugszeichenliste

- 1: Vorrichtung zur Federung und Niveaueinstellung
- 2: erstes Anschlusselement
- 3: zweites Anschlusselement
- 4: Fahrzeugrad
- 5: Karosserie
- 6: Fahrwerksfeder
- 7: Verstelleinrichtung
- 8: Getriebe
- 9: erste Widerlagerstelle
- 10: zweite Widerlagerstelle
- 11: Auflagestelle
- 12: Radachse
- 13: Stoßdämpfer
- 14: Getriebe-Feder
- 15a: obere Windung
- 15b: untere Windung
- 16a: Eingriffsmittel
- 16b: Eingriffsmittel
- 17: Antriebsmotor
- 18: Stator
- 19: Rotor
- 20: Wicklung
- 21: Leiterplatte
- 22: elektrische Anschlüsse
- 23: Isolierschicht
- 24: Führungszapfen
- 25: Führungshülse
- 26: innere Führungshülse
- 27: äußere Führungshülse
- 28: Gehäuseteil
- 29: Deckelteil
- 30: Einformung
- 31: Dichtmanschette
- 32a: Achse
- 32b: Achse
- 33a: Rolle
- 33b: Rolle
- 34: Hülsenelement
- 35: U-Schenkel
- 36: Aussparung
- 37: Vorsprung
- 38: Rotorteil
- 39: Permanentmagnet
- 40: Wälzlagerung
- 41: inneres Abstützteil
- 42: äußeres Abstützteil
- 43: Führungsrohr
- 44: Entlüftungseinrichtung
- 45: Zusatzfeder
- 46: Führungsstange

## Patentansprüche

1. Vorrichtung (1) zur Federung und Niveaueinstellung bei Kraftfahrzeugen, mit einem ersten Anschlusselement (2) zum Verbinden mit mindestens einem Fahrzeugrad (4) und mit einem zweiten Anschlusselement (3) zum Verbinden mit der Karosserie (5) des Kraftfahrzeugs, mit wenigstens einer Fahrwerksfeder (6) und einer Verstelleinrichtung (7), die zwei mittels eines Antriebsmotors (17) antreibbaren Getriebes (8) in ihrem Abstand zueinander verstellbare Widerlagerstellen (9, 10) aufweist, von denen eine erste Widerlagerstelle (9) mit dem einen Anschlusselement (2, 3) verbunden oder an diesem angeordnet ist und eine zweite Widerlagerstelle (10) über die die Fahrwerksfeder (6) gegen das andere Anschlusselement (3, 2) abgestützt ist, **dadurch gekennzeichnet, dass** das Getriebe (8) eine Windungen aufweisende Feder (14) und zumindest ein zwischen mindestens zwei zueinander benachbarte Windungen eingreifendes Eingriffsmittel (16a, 16b) aufweist, dass die Getriebe-Feder (14) der einen Widerlagerstelle (9, 10) und das Eingriffsmittel (16a, 16b) der anderen Widerlagerstelle (10, 9) zugeordnet ist, und dass die Getriebe-Feder (14) und das Eingriffsmittel (16a, 16b) relativ zueinander verdrehbar gelagert und zum Verstellen des Abstands der Widerlagerstellen (9, 10) mit Hilfe des Antriebsmotors (17) drehantreibbar sind.

2. Vorrichtung (1) nach Anspruch 1, **dadurch gekennzeichnet, dass** der Antriebsmotor (17) ein Elektromotor, insbesondere ein bürstenloser EC-Motor ist.

3. Vorrichtung (1) nach Anspruch 1 oder 2, **dadurch gekennzeichnet, dass** das Getriebe (8) als selbsthemmendes Getriebe (8) ausgestaltet ist.

4. Vorrichtung (1) nach einem der Ansprüche 1 bis 3, **dadurch gekennzeichnet, dass** der Antriebsmotor (17) zumindest bereichsweise in dem von den Windungen der Getriebe-Feder (14) umgrenzten Raum angeordnet ist.

5. Vorrichtung (1) nach einem der Ansprüche 1 bis 4, **dadurch gekennzeichnet, dass** der EC-Motor eine Ansteuereinrichtung für seine Wicklung aufweist, und dass die Ansteuereinrichtung in dem von den Windungen der Getriebe-Feder (14) umgrenzten Raum angeordnet ist.

6. Vorrichtung (1) nach einem der Ansprüche 1 bis 5, **dadurch gekennzeichnet, dass** der Antriebsmotor (17) als Außenläufer mit einem um einen Stator (18) herum angeordneten Rotor (19) ausgebildet ist, und dass das Eingriffsmittel (16a, 16b) am Außenumfang des Rotors (19) vorgesehen ist.

7. Vorrichtung (1) nach einem der Ansprüche 1 bis 6, **dadurch gekennzeichnet, dass** der Antriebsmotor (17) am Außenumfang der Getriebe-Feder (14) vorzugsweise um diese herum angeordnet ist.

8. Vorrichtung (1) nach einem der Ansprüche 1 bis 7, **dadurch gekennzeichnet, dass** der Antriebsmotor (17) als Innenläufer mit einem um einen ringförmigen Rotor (19) herum angeordneten Stator (18) ausgebildet ist, und dass das Eingriffsmittel (16a, 16b) am Innenumfang des Rotors (19) vorgesehen ist.

9. Vorrichtung (1) nach einem der Ansprüche 1 bis 8, **dadurch gekennzeichnet, dass** die Fahrwerksfeder (6) eine gewundene Feder, insbesondere eine Schrauben- oder Spiralfeder ist, und dass der Antriebsmotor (17) und/oder die Getriebe-Feder (14) zumindest bereichsweise in dem von den Windungen der Fahrwerksfeder (6) umgrenzten Raum angeordnet ist (sind).

10. Vorrichtung (1) nach einem der Ansprüche 1 bis 9, **dadurch gekennzeichnet, dass** die Anschlusselemente (2, 3) über eine Axialführung relativ zueinander verschiebbar miteinander verbunden sind.

11. Vorrichtung (1) nach einem der Ansprüche 1 bis 10, **dadurch gekennzeichnet, dass** die Axialführung eine auf einem Führungszapfen (24) verschiebbar angeordnete Führungshülse (25) aufweist, und dass der Antriebsmotor (17) und/oder die Getriebe-Feder (14) um die Führungshülse (25) herum angeordnet ist (sind).

12. Vorrichtung (1) nach einem der Ansprüche 1 bis 11, **dadurch gekennzeichnet, dass** die Axialführung eine innere Führungshülse (26) und eine relativ dazu verschiebbare äu-ßere Führungshülse (27) aufweist, und dass der Antriebsmotor (17) und/oder die Getriebe-Feder (14) zumindest bereichsweise in dem von der inneren Führungshülse (26) umgrenzten Raum angeordnet ist (sind).

13. Vorrichtung (1) nach einem der Ansprüche 1 bis 12, **dadurch gekennzeichnet, dass** die Verstelleinrichtung (7) ein etwa hutförmiges Gehäuseteil (28) aufweist, in dessen Innenhöhlung die Getriebe-Feder (14) und der Antriebsmotor (17) vorgesehen sind, dass Gehäuseteil (28) in den von den Windungen der Fahrwerksfeder (6) umgrenzten Raum eingreift, und dass die zweite Widerlagerstelle (10) der Verstelleinrichtung (7) am Außenrand des Gehäuseteils (28) angeordnet ist und vorzugsweise eine Einformung (30) zur Aufnahme eines Axialendes der Fahrwerksfeder (6) aufweist.

14. Vorrichtung (1) nach einem der Ansprüche 1 bis 13, **dadurch gekennzeichnet, dass** der Führungszapfen (24) vorzugsweise etwa mittig derart am Boden des hutförmigen Gehäuseteils (28) angeordnet ist, dass er in die in Innenhöhlung des Gehäuseteils (28) hineinragt.

15. Vorrichtung (1) nach einem der Ansprüche 1 bis 14, **dadurch gekennzeichnet, dass** mit der Führungshülse (25) ein sich quer zu deren Längsachse erstreckender Flansch verbunden ist, und dass der Außenrand des Flanschs über eine elastische Dichtmanschette (31), insbesondere einen Falten- oder Rollbalg, mit dem Außenrand des hutförmigen Gehäuseteils (28) verbunden ist.

16. Vorrichtung (1) nach einem der Ansprüche 1 bis 15, **dadurch gekennzeichnet, dass** von dem Eingriffsmittel (16a, 16b) beabstandete Windungen der Getriebe-Feder (14) im Wesentlichen auf Anschlag angeordnet sind.

17. Vorrichtung (1) nach einem der Ansprüche 1 bis 16, **dadurch gekennzeichnet, dass** das zumindest eine Eingriffsmittel (16a, 16b) eine Achse (32a, 32b) aufweist, auf der vorzugsweise mittels einer Wälzlagerung eine Rolle (33a, 33b) derart drehbar gelagert ist, dass sie beim Verdrehen des Eingriffsmittels (16a, 16b) relativ zu der Getriebe-Feder (14) auf dieser abrollt.

18. Vorrichtung (1) nach einem der Ansprüche 1 bis 17, **dadurch gekennzeichnet, dass** sie mehrere Eingriffsmittel (16a, 16b) aufweist, die derart entlang einer Windung der Getriebe-Feder (14) zueinander versetzt sind, dass die Eingriffsmittel (16a, 16b) gleichzeitig an der Windung angreifen.

19. Vorrichtung (1) nach einem der Ansprüche 1 bis 18, **dadurch gekennzeichnet, dass** die Achsen (32a, 32b) der Rollen (33a, 33b) von mindestens zwei in Umfangsrichtung der Getriebe-Feder (14) nebeneinander angeordneten, zwischen die Windungen der Getriebe-Feder (14) eingreifenden Rollen (33a, 33b) derart quer zur Umfangsrichtung zueinander versetzt sind, dass eine erste Rolle (33a) oder eine erste Gruppe von Rollen (33a) nur an der einen und eine zweite Rolle (33b) oder eine zweite Gruppe von Rollen (33b) nur an der anderen Windung angreift.

20. Vorrichtung (1) nach einem der Ansprüche 1 bis 19, **dadurch gekennzeichnet, dass** sie ein zu der Getriebe-Feder (14) etwa konzentrisch angeordnetes, mit dem Antriebsmotor (17) in Antriebsverbindung stehendes Hülsenelement (34) aufweist, das an seinem einen Ende einen etwa U-förmig umgebogenen Randbereich hat, der zwei durch einen U-Quersteg miteinander verbundene U-Schenkel (35) hat, dass die U-Schenkel (35) mindestens zwei in radialer Richtung zueinander fluchtende Lageröffnungen haben, in welche die Achse (32a, 32b) des mindestens einen Eingriffselements (16a, 16b) eingesetzt ist, dass auf der Achse (32a, 32b) zwischen den U-Schenkeln (35) die Rolle (33a, 33b) angeordnet ist, dass in dem U-Quersteg eine Durchtrittsöffnung für die Rolle (33a, 33b) vorgesehen ist, und dass die Rolle (33a, 33b) durch die Durchtrittsöffnung hindurch an der Windung der Getriebe-Feder (14) angreift.

21. Vorrichtung (1) nach einem der Ansprüche 1 bis 20, **dadurch gekennzeichnet, dass** das Hülsenelement (34) vorzugsweise mittels einer Wälz- und/oder Gleitlagerung um seine Längsachse verdrehbar auf der Führungshülse (34) gelagert ist.

22. Vorrichtung (1) nach einem der Ansprüche 1 bis 21, **dadurch gekennzeichnet, dass** zur seitlichen Führung der Windungen der Getriebe-Feder (14), die bei einer Beaufschlagung der Anschlusselemente mit einer Kraft vom Kraftfluss durchsetzt sind, ein Führungsrohr (43) vorgesehen ist, das vorzugsweise mit seiner Außenmantelfläche der Innenseite der Windungen zugewandt ist.

23. Vorrichtung (1) nach einem der Ansprüche 1 bis 22, **dadurch gekennzeichnet, dass** sie zusätzlich zu der Fahrwerksfeder (6) eine Zusatzfeder (45) aufweist, welche die Anschlusselemente (2, 3) direkt oder indirekt über mindestens ein Zwischenelement miteinander verbindet.

24. Vorrichtung (1) nach Anspruch 23, **dadurch gekennzeichnet, dass** die Federsteifigkeit der Fahrwerksfeder (6) zwischen 30% und 60% der resultierenden Gesamtfedersteifigkeit der Fahrwerksfeder (6) und der Zusatzfeder (45) beträgt.

## Claims

1. Device (1) for suspension and height adjustment in motor vehicles, having a first connection element (2) for connecting with at least one vehicle wheel (4) and having a second connection element (3) for connection with the body (5) of the motor vehicle, having at least one chassis spring (6) and an adjusting device (7) that has two abutment points (9, 10) whose distance from each other is adjustable by means of a gear unit (8) driven by a drive motor (17), of which a first abutment point (9) is connected to the one connection element (2, 3) or is situated on it, and a second abutment point (10) through which the chassis spring (6) is supported against the other connection element (3, 2), **characterized in that** the gear unit (8) has a spring (14) having coils and at least one means of intervention (16a, 16b) intervening between at least two adjacent coils, that the gear spring (14) is assigned to the one abutment point (9, 10) and the means of intervention (16a, 16b) is assigned to the other abutment point (10, 9), and that the gear spring (14) and the means of intervention (16a, 16b) are mounted so that they can rotate relative to each other and are rotary drivable with the help of the drive motor (17) to adjust the spacing of the abutment points (9, 10).

2. Device (1) according to Claim 1, **characterized in that** the drive motor (17) is an electric motor, in particular a brushless EC motor.

3. Device (1) according to Claim 1 or 2, **characterized in that** the gear unit (8) is designed as a self-braking gear unit (8).

4. Device (1) according to one of Claims 1 through 3, **characterized in that** at least part of the drive motor (17) is situated in the space bounded by the coils of the gear spring (14).

5. Device (1) according to one of Claims 1 through 4, **characterized in that** the EC motor has a control device for its winding, and that the control device is situated in the space bounded by the coils of the gear spring (14).

6. Device (1) according to one of Claims 1 through 5, **characterized in that** the drive motor (17) is designed as an external rotor motor with a rotor (19) situated around a stator (18), and that the means of intervention (16a, 16b) is provided on the outer circumference of the rotor (19).

7. Device (1) according to one of Claims 1 through 6, **characterized in that** the drive motor (17) is situated on the outer circumference of the gear spring (14), preferably around it.

8. Device (1) according to one of Claims 1 through 7, **characterized in that** the drive motor (17) is designed as an internal rotor motor with a stator (18) situated around a ring-shaped rotor (18), and that the means of intervention (16a, 16b) is provided on the inner circumference of the rotor (19).

9. Device (1) according to one of Claims 1 through 8, **characterized in that** the chassis spring (6) is a coiled spring, in particular a helical or spiral spring, and that the drive motor (17) and/or the gear spring (14) is (are) at least partially situated in the space bounded by the chassis spring.

10. Device (1) according to one of Claims 1 through 9, **characterized in that** the connection elements (2, 3) are connected with each other so that they can be moved relative to each other via an axial guide.

11. Device (1) according to one of Claims 1 through 10, **characterized in that** the axial guide has a guide sleeve (25) that is movably situated on a guide pin (24), and that the drive motor (17) and/or the gear spring (14) is (are) situated around the guide sleeve (25).

12. Device (1) according to one of Claims 1 through 11, **characterized in that** the axial guide has an inner guide sleeve (26) and an outer guide sleeve (27) that is movable relative to it, and that the drive motor (17) and/or the gear spring (14) is (are) at least partially situated in the space bounded by the inner guide sleeve (26).

13. Device (1) according to one of Claims 1 through 12, **characterized in that** the repositioning device (7) has an approximately hat-shaped housing part (28) in whose internal cavity the gear spring (14) and the drive motor (17) are situated, that the housing part (28) intervenes in the space bounded by the coils of the chassis spring (6), and that the second abutment point (10) of the repositioning device (7) is situated on the outer rim of the housing part (28) and preferably has a molded indentation (30) to receive an axial end of the chassis spring (6).

14. Device (1) according to one of Claims 1 through 13, **characterized in that** the guide pin (24) is situated approximately in the center of the floor of the hat-shaped housing part (28) in such a way that it projects into the internal cavity of the housing part (28).

15. Device (1) according to one of Claims 1 through 14, **characterized in that** a flange that extends transversely to the longitudinal axis of the guide sleeve (25) is connected to the latter and that the outer rim of the flange is connected to the outer rim of the hat-shaped housing part (28) by means of an elastic sealing sleeve (31), in particular an expansion bellows or a roll boot.

16. Device (1) according to one of Claims 1 through 15, **characterized in that** coils of the gear spring (14) that are spaced away from the means of intervention (16a, 16b) are situated essentially against the stop.

17. Device (1) according to one of Claims 1 through 16, **characterized in that** the at least one means of intervention (16a, 16b) has an axle (32a, 32b) on which a roller (33a, 33b) is rotatably mounted, preferably by means of roller bearings, in such a way that when the means of intervention (16a, 16b) twists relative to the gear spring (14), the roller rolls onto the latter.

18. Device (1) according to one of Claims 1 through 17, **characterized in that** it has a plurality of means of intervention (16a, 16b), which are offset from each other along a coil of the gear spring (14) in such a way that the means of intervention (16e, 16b) simultaneously engage the coil.

19. Device (1) according to one of Claims 1 through 18, **characterized in that** the axles (32a, 32b) of the rollers (33a, 33b) of at least two rollers (33a, 33b) that are situated beside each other in the circumferential direction of the gear spring (14) and intervene between the turns of the gear spring (14) are offset from each other transversely to the circumferential direction in such a way that a first roller (33a) or a first group of rollers engages only the one turn and a second roller (33b) or a second group of rollers engages only the other turn.

20. Device (1) according to one of Claims 1 through 19, **characterized in that** it has a sleeve element (34) that is situated approximately concentrically to the gear spring (14) and has a drive connection to the drive motor (17), which sleeve element has an approximately U-shaped bent edge area on one of its ends which has two U-shaped legs (35) joined together by a U-shaped cross piece, that the U-shaped legs (35) have at least two bearing openings that are aligned with each other in the radial direction, into which the axle (32a, 32b) of the at least one intervening element (16a, 16b) is inserted, that the roller (33a, 33b) is situated on the axle (32a, 32b) between the U-shaped legs (35), that a through opening is provided in the U crosspiece for the roller (33a, 33b), and that the roller (33a, 33b) engages the coil of the gear spring (14) through the through opening.

21. Device (1) according to one of Claims 1 through 20, **characterized in that** the sleeve element (34) is mounted on the guide sleeve (34) so that it can be rotated around its longitudinal axis, preferably by means of roller and/or slide bearings.

22. Device (1) according to one of Claims 1 through 21, **characterized in that** for lateral guidance of the turns of the gear spring (14) which are permeated by a force from the transmission of power when applied to the connection elements, a guide tube (43) is provided whose outer surface area preferably faces the inner surface of the coils.

23. Device (1) according to one of Claims 1 through 22, **characterized in that** in addition to the chassis spring (6) it also has an auxiliary spring (45), which joins the connection elements (2, 3) together directly or indirectly through at least one intermediate element.

24. Device (1) according to Claim 23, **characterized in that** the spring stiffness of the chassis spring (6) is between 30% and 60% of the resulting total spring stiffness of the chassis spring (6) and the auxiliary spring (45).

## Revendications

1. Dispositif (1) pour la suspension et le réglage de niveau concernant des véhicules automobiles, comprenant un premier élément de jonction (2) pour la liaison avec au moins une roue de véhicule (4), et un deuxième élément de jonction (3) pour la liaison avec la carrosserie (5) du véhicule automobile, comprenant au moins un ressort de suspension (6) et un dispositif de réglage (7) qui présente deux points de butée (9, 10) réglables l'un par rapport à l'autre en terme de distance, au moyen d'un mécanisme (8) pouvant être actionné par un moteur d'entraînement (17), un premier point de butée (9) étant relié à l'un des éléments de jonction (2, 3) ou bien étant disposé sur celui-ci, et un deuxième point de butée (10) étant en appui contre l'autre élément de jonction (3, 2), au moyen du ressort de suspension (6), **caractérisé en ce que** le mécanisme (8) présente un ressort (14) présentant des spires et au moins un moyen de contact (16a, 16b) s'engageant entre au moins deux spires voisines l'une de l'autre, **en ce que** le ressort (14) du mécanisme est affecté à l'un des points de butée (9, 10), et le moyen de contact (16a, 16b) à l'autre point de butée (10, 9), et **en ce que** le ressort (14) du mécanisme et le moyen de contact (16a, 16b) sont montés en rotation l'un par rapport à l'autre et, à l'aide du moteur d'entraînement (17), peuvent être entraînés en rotation pour le réglage de la distance entre les points de butée (9, 10).

2. Dispositif (1) selon la revendication 1, **caractérisé en ce que** le moteur d'entraînement (17) est un moteur électrique, en particulier un moteur à commutation électronique, sans balai.

3. Dispositif (1) selon la revendication 1 ou 2, **caractérisé en ce que** le mécanisme (8) est conçu comme un mécanisme autobloquant (8).

4. Dispositif (1) selon l'une quelconque des revendications 1 à 3, **caractérisé en ce que** le moteur d'entraînement (17) est disposé au moins partiellement dans l'espace délimité par les spires du ressort (14) du mécanisme.

5. Dispositif (1) selon l'une quelconque des revendications 1 à 4, **caractérisé en ce que** le moteur à commutation électronique présente un dispositif de pilotage pour son enroulement, et **en ce que** le dispositif de pilotage est disposé dans l'espace délimité par les spires du ressort (14) du mécanisme.

6. Dispositif (1) selon l'une quelconque des revendications 1 à 5, **caractérisé en ce que** le moteur d'entraînement (17) est conçu comme un induit extérieur comprenant un rotor (19) disposé tout autour d'un stator (18), et **en ce que** le moyen de contact (16a, 16b) est prévu sur la circonférence extérieure du rotor (19).

7. Dispositif (1) selon l'une quelconque des revendications 1 à 6, **caractérisé en ce que** le moteur d'entraînement (17) est disposé sur la circonférence extérieure du ressort (14) du mécanisme, de préférence tout autour de celui-ci.

8. Dispositif (1) selon l'une quelconque des revendications 1 à 7, **caractérisé en ce que** le moteur d'entraînement (17) est conçu comme un induit intérieur comprenant un stator (18) disposé tout autour d'un rotor (19) de forme annulaire, et **en ce que** le moyen de contact (16a, 16b) est prévu sur la circonférence intérieure du rotor (19).

9. Dispositif (1) selon l'une quelconque des revendications 1 à 8, **caractérisé en ce que** le ressort de suspension (6) est un ressort enroulé, en particulier un ressort hélicoïdal ou un ressort en spirale, et **en ce que** le moteur d'entraînement (17) et / ou le ressort (14) du mécanisme est (sont) disposé(s) au moins partiellement dans l'espace délimité par les spires du ressort de suspension (6).

10. Dispositif (1) selon l'une quelconque des revendications 1 à 9, **caractérisé en ce que** les éléments de jonction (2, 3) sont reliés entre eux par un guide axial, en étant mobiles l'un par rapport à l'autre.

11. Dispositif (1) selon l'une quelconque des revendications 1 à 10, **caractérisé en ce que** le guide axial présente une douille de guidage (25) disposée en étant mobile sur un tourillon de guidage (24), et **en ce que** le moteur d'entraînement (17) et / ou le ressort (14) du mécanisme est (sont) disposé(s) tout autour de la douille de guidage (25).

12. Dispositif (1) selon l'une quelconque des revendications 1 à 11, **caractérisé en ce que** le guide axial présente une douille intérieure de guidage (26) et une douille extérieure de guidage (27) mobile par rapport à cette douille intérieure de guidage, et **en ce que** le moteur d'entraînement (17) et / ou le ressort (14) du mécanisme est (sont) disposé(s) au moins partiellement dans l'espace délimité par la douille intérieure de guidage (26).

13. Dispositif (1) selon l'une quelconque des revendications 1 à 12, **caractérisé en ce que** le dispositif de réglage (7) présente une partie (28) formant boîtier, ayant à peu près une forme de chapeau, creux à l'intérieur de la partie formant boîtier dans lequel il est prévu le ressort (14) du mécanisme et le moteur d'entraînement (17), **en ce que** la partie (28) formant boîtier s'engage dans l'espace délimité par les spires du ressort de suspension (6), et **en ce que** le deuxième point de butée (10) du dispositif de réglage (7) est disposé sur le bord extérieur de la partie (28) formant boîtier et présente, de préférence, un moulage (30) pour le logement d'une extrémité axiale du ressort de suspension (6).

14. Dispositif (1) selon l'une quelconque des revendications 1 à 13, **caractérisé en ce que** le tourillon de guidage (24) est disposé, de préférence, à peu près au milieu, au fond de la partie (28) formant boîtier, en forme de chapeau, de manière telle que le tourillon de guidage pénètre dans le creux intérieur de la partie (28) formant boîtier.

15. Dispositif (1) selon l'une quelconque des revendications 1 à 14, **caractérisé en ce qu'**une bride est reliée à la douille de guidage (25) en s'étendant de façon transversale par rapport à l'axe longitudinal de cette douille de guidage, et **en ce que** le bord extérieur de la bride est relié au bord extérieur de la partie (28) formant boîtier, en forme de chapeau, par une manchette d'étanchéité élastique (31), en particulier par un joint soufflet ou un soufflet en U.

16. Dispositif (1) selon l'une quelconque des revendications 1 à 15, **caractérisé en ce que** des spires du ressort (14) du mécanisme, espacées du moyen de contact (16a, 16b), sont disposées essentiellement en faisant butée.

17. Dispositif (1) selon l'une quelconque des revendications 1 à 16, **caractérisé en ce que** le moyen de contact (16a, 16b) au moins au nombre de un présente un axe (32a, 32b) sur lequel est monté en rotation un rouleau (33a, 33b), de préférence au moyen d'un montage sur des paliers à roulements, de manière telle que le rouleau, lors de la rotation du moyen de contact (16a, 16b) par rapport au ressort (14a) du mécanisme, roule sur celui-ci.

18. Dispositif (1) selon l'une quelconque des revendications 1 à 17, **caractérisé en ce que** le dispositif présente plusieurs moyens de contact (16a, 16b) qui sont décalés les uns par rapport aux autres, le long d'une spire du ressort (14) du mécanisme, de manière telle que les moyens de contact (16a, 16b) s'engagent en même temps sur la spire.

19. Dispositif (1) selon l'une quelconque des revendications 1 à 18, **caractérisé en ce que** les axes (32a, 32b) des rouleaux (33a, 33b) sont décalés l'un par rapport à l'autre, de façon transversale par rapport à la direction circonférentielle, par au moins deux rouleaux (33a, 33b) disposés l'un à côté de l'autre dans la direction circonférentielle du ressort (14) du mécanisme et s'engageant entre les spires du ressort (14) du mécanisme, de manière telle qu'un premier rouleau (33a) ou un premier groupe de rouleaux (33a) s'engage seulement sur l'une des spires, et un deuxième rouleau (33b) ou un deuxième groupe de rouleaux (33b) s'engage seulement sur l'autre spire.

20. Dispositif (1) selon l'une quelconque des revendications 1 à 19, **caractérisé en ce que** le dispositif présente un élément à douille (34) disposé de façon à peu près concentrique par rapport au ressort (14) du mécanisme et se trouvant en liaison d'entraînement avec le moteur d'entraînement (17), élément à douille qui, au niveau de l'une de ses extrémités, a une zone de bordure recourbée à peu près en forme de U, zone de bordure qui comprend deux branches (35) en U reliées entre elles par une entretoise transversale en U, **en ce que** les branches (35) en U comprennent au moins deux ouvertures de roulement alignées entre elles dans le sens radial, ouvertures de roulement dans lesquelles s'engage l'axe (32a, 32b) de l'élément de contact (16a, 16b) au moins au nombre de un, **en ce que** le rouleau (33a, 33b) est disposé sur l'axe (32a, 32b) entre les branches (35) en U, **en ce qu'**il est prévu, dans l'entretoise transversale en U, une ouverture de passage pour le rouleau (33a, 33b), et **en ce que** le rouleau (33a, 33b), en traversant l'ouverture de passage, s'engage sur la spire du ressort (14) du mécanisme.

21. Dispositif (1) selon l'une quelconque des revendications 1 à 20, **caractérisé en ce que** l'élément à douille (34) est logé sur la douille de guidage (34), en rotation autour de son axe longitudinal, de préférence au moyen d'un montage sur des paliers à roulements et / ou d'un montage sur des paliers lisses.

22. Dispositif (1) selon l'une quelconque des revendications 1 à 21, **caractérisé en ce que**, pour le guidage latéral des spires du ressort (14) du mécanisme, qui, lors d'une sollicitation des éléments de jonction, sont traversées par une force du flux de force, il est prévu un tube de guidage (43) qui, par sa surface d'enveloppe extérieure, est tourné de préférence vers le côté intérieur des spires.

23. Dispositif (1) selon l'une quelconque des revendications 1 à 22, **caractérisé en ce que** le dispositif, en plus du ressort de suspension (6), présente un ressort supplémentaire (45) qui relie entre eux les éléments de jonction (2, 3), directement ou indirectement, par au moins un élément intermédiaire.

24. Dispositif (1) selon la revendication 23, **caractérisé en ce que** la rigidité du ressort de suspension (6) est comprise entre 30 % et 60 % de la rigidité totale des ressorts résultant de celle du ressort de suspension (6) et de celle du ressort supplémentaire (45).
